# EUROPÄISCHE PATENTSCHRIFT

(11) **EP 1 293 338 B1**
(45) Veröffentlichungstag und Bekanntmachung des Hinweises auf die Patenterteilung: **06.04.2011**
(21) Anmeldenummer: 02028919.5
(22) Anmeldetag: 04.08.1999
(51) Int. Cl.: B32B 37/00

(54) **Verfahren zur Herstellung einer Verbundscheibe**
Method for producing a composite glass
Procédé pour fabriquer un verre feuilleté

(30) Priorität: 06.08.1998 DE 19835496
(43) Veröffentlichungstag der Anmeldung: 19.03.2003
(62) Teilanmeldung aus: 99944333.6
(73) Patentinhaber: Haverkamp GmbH, 48165 Münster (DE)
(72) Erfinder: Haverkamp, Ulrich, 48149 Münster (DE); Niemeyer, Friedel, 49328 Melle (DE)
(74) Vertreter: Tarvenkorn, Oliver

(56) Entgegenhaltungen:
- EP-A- 0 403 321
- WO-A-88/01230
- DE-A- 4 422 449
- US-A- 3 944 461
- US-A- 5 227 185

## Beschreibung

Die Erfindung betrifft ein Verfahren zur Herstellung einer Verbundscheibe gemäß dem Oberbegriff des Anspruchs 1.

Es ist bekannt, eine ein- oder mehrschichtige Folie, bestehend aus einer Kunststoffolienschicht und einer Klebstoffschicht, auf ein wenigstens einachsig gebogenes Glaselement, beispielsweise eine Automobil-Windschutzscheibe, aufzubringen. Dazu wird die zu beschichtende Oberfläche mit Wasser benetzt und die Folie aufgelegt. Anschließend wird die zwischen der Folie und dem Glaselement befindliche Wasserschicht mit Hilfe von Werkzeugen, die mit Gummilippen ausgerüstet sind, manuell herausgequetscht. Auf diese Weise wird das vollflächige und blasenfreie Anliegen der Folie an der gewölbten Oberfläche des Glaselementes bewirkt. Zum Abbinden des Klebstoffs wird der Verbund ausgelagert und/oder in einem Autoklavenprozeß behandelt.

Eine auf diese Weise hergestellte Verbundscheibe hat den Nachteil, daß die Klebstoffverbindung in heißen und feuchten Umgebungen nicht beständig ist und es zur partiellen Ablösung des Verbundes aus Glaselement und Kunststoffolie kommt.

Nachteilig ist weiterhin besonders die personal- und zeitintensive Fertigung des Verbundes aus Glaselement und Folie. Die in der Klebfuge verbleibende Restfeuchtigkeit muß über einen Zeitraum von mehreren Wochen ausdiffundieren, so daß das Abbinden der Klebschicht verzögert ist und insbesondere ein Beschneiden der Ränder und das Abtrennen überstehender Folienreste nicht möglich ist.

Aus der US-Patentschrift 5 188 692 ist eine Methode zum Laminieren von Kunststoffen auf Glas offenbart, bei der Glas und Folie in einer Presse miteinander verbunden werden, wobei ohne eine Wasserschicht ein flächiger Verbund von Glas und Folie hergestellt werden kann.

Nachteilig ist hier aber, daß für jede Form eines Glaselementes ein Paar von Preßwerkzeugen hergestellt werden muß. Eine wirtschaftliche Durchführung des Verfahrens ist daher nur für sehr große Stückzahlen möglich. Auch treten beim Härten von Glas Geometrieveränderungen auf, so daß die Form des Glaselementes und des aufnehmenden Werkzeuges voneinander abweichen können. Die Bruchgefahr ist somit erhöht und es muß mit hohen Ausschußquoten gerechnet werden. Ein gegenüber starken Wärme- und Feuchtigkeitseinflüssen beständiges Verbundglas ist nicht offenbart.

Aus der US-Patentschrift 4 327 634 ist eine Vorrichtung zur Verbindung von Glasscheiben und Kunststoffolien bekannt. Die Vorrichtung umfaßt eine untere Andruckrolle, die an die konkave Form des Glases über eine variierbare Durchbiegung anpaßbar ist. Eine mit einer Folie belegte, gebogene Glasscheibe wird durch ein Walzenpaar, bestehend aus der unteren, gebogenen Rolle und einer darüber angeordneten, zylindrischen Rolle, hindurch gezogen.

Ein Nachteil dieser Erfindung ist die aufwendige Bauweise der Vorrichtung und zudem die zeitintensive Anpassung der Rollendurchbiegung an die Form des aktuell verwendeten Glaselementes. Ausgegangen wird außerdem von einer Polyurethan-Folie, die mit einer thermoplastischen, klebfähigen Schicht versehen ist. Es hat sich gezeigt, daß mit einer solchen Schicht als Haftvermittler keine ausreichende Haftung durch Kalandrierung erreicht werden kann. Eine Erhöhung der Klebkraft kann nur über einen Autoklaven-Prozeß mit allen bekannten Nachteilen bewirkt werden.

Um die im Stand der Technik vorgesehene Durchbiegung einer Andruckrolle zu bewirken und die hohen dabei auftretenden Kräfte aufzunehmen, ist eine sehr steife und mithin schwere Konstruktion erforderlich. Die Kosten der Vorrichtung werden weiterhin dadurch erhöht, daß eine Vielzahl von Verstellelementen vorzusehen ist. Nachteilig ist auch, daß Formabweichungen zwischen gebogener Rolle und Glaselement zum Bruch des Glaselementes führen können. Mit den bekannten Vorrichtungen ist es insbesondere nicht möglich, Formänderungen mit unstetigem Kurvenverlauf, wie sprunghafte Dickenänderungen im Randbereich, dauerhaft mit einer Folie zu verbinden.

Verbundscheiben, die mit den aus dem Stand der Technik bekannten Vorrichtungen gefertigt worden sind, weisen eine Vielzahl von Fremdpartikel-Einschlüssen auf, wodurch die Homogenität und Durchsichtigkeit der Verbundscheibe herabgesetzt wird, so daß diese entweder nur in nebengeordneten Bereichen verwendbar oder auszusondern sind.

Es ist demnach eine Aufgabe der Erfindung, ein Verfahren der eingangs genannten Art zu verbessern und die Wirtschaftlichkeit der Fertigung zu erhöhen.

Diese Aufgabe wird durch ein Verfahren mit den Merkmalen des Anspruchs 1 gelöst.

Als "Glaselement" sollen hier Einzelscheiben oder Mehrfachverbunde von Scheiben, auch aus unterschiedlichen Materialien zusammengesetzt, bezeichnet werden, wobei die Scheiben aus anorganischen Gläsern, insbesondere Silicatglas, und/oder aus transparentem Kunststoff bestehen.

Vorteilhaft ist hier besonders, daß das Verfahren vollständig ohne Wasser als Gleitmittel durchgeführt wird. Zum einen entfallen damit die langwierigen und aufwendigen Fertigungsschritte des Ausquetschens der Wasserschicht und des Verdunstenlassens des Restwassers. Der nach dem erfindungsgemäßen Verfahren hergestellte Verbund aus Folie und Glaselement ist direkt nach der Kalandrierung gebrauchsfertig, da das Abbinden der Klebstoffschicht und die Herstellung einer dauerhaften Verbindung bereits im Kalander bewirkt wird.

Zum anderen ist es vorteilhaft, daß der Klebstoff nicht gleitfähig ist und daß die Haftkraft des Klebstoffs eine Relativbewegung zwischen dem Glaselement und der anhaftenden Kunststoffolienschicht während und nach dem flächigen Anlegen unterbindet. Beim Anpressen im Kalanderspalt wird somit sofort eine feste Klebverbindung zwischen Folie und Glaselement hergestellt. Es ist möglich, die Folie lokal zu verstrecken und an die Krümmungen des Glaselementes anzupassen. Die Klebfestigkeit ist bei der Verklebung nach der Erfindung stets größer als die vorhandenen Schubspannungen, die auf den elastischen Rückstellkräfte in der Folie infolge lokaler Verstreckungen beruhen, so daß ein nachträglicher Verzug infolge Spannungsabbau (Retardation) der Folie nicht möglich ist.

Durch die erst unmittelbar vor dem Eintritt in den Kalander erfolgende Reinigung des Glaselementes werden Fehlstellen im Verbundglas durch Fremdpartikeleinschlüsse weitgehend vermieden.

Eine wirkungsvolle Reinigung des Glaselementes vor dem Eintritt in den Kalander wird mit einer bürstenbestückten Reinigungsvorrichtung bewirkt. Ein solches, die Oberfläche berührendes Reinigungswerkzeug kann auch solche anhaftenden Fremdpartikel von der Oberfläche entfernen, die durch Luftstrom allein nicht zu entfernen sind. Zugleich werden Turbulenzen der Umgebungsluft vermieden, wie sie bei Saugvorrichtungen oder Gebläsen auftreten.

Durch die Aktivierung des Klebstoffs erst unmittelbar vor dem Einführen der Folie in den Kalanderspalt legt die aktivierte Klebstoffschicht nur einen sehr kurzen Weg zurück, wobei sie keine weiteren Rollen kontaktiert. Es wird vermieden, daß die Klebstoffschicht Schmutzpartikel aus der Umgebungsluft oder von anderen Vorrichtungsteilen bindet. Die Homogenität und Durchsichtigkeit der erhaltenen Verbundscheibe wird deshalb nicht durch Verschmutzungen beeinträchtigt.

Vorteilhaft ist, daß mit dem Verfahren der Erfindung doppeltkonkave, also zweiachsig gebogene Oberflächen, z. B. einer Windschutzscheibe, faltenfrei beschichtbar sind. Bei Autoverglasungen ist es günstig, die Folie mit der zum Fahrzeuginnenraum weisenden konkaven Oberfläche des Glaselementes zu verbinden, so daß im Schadensfall ein Eindringen von Bruchteilen des Glaselementes in den Fahrzeuginnenraum verhindert wird.

Vorteilhaft ist auch, daß unmittelbar nach dem Austritt der Verbundscheibe aus dem Kalander ein Beschnitt der Kanten durchgeführt werden kann. Die Klebstoffverbindung erreicht im Kalander ihre maximale Festigkeit, so daß nach dem Austritt aus dem Kalanders keine Abbindeprozesse mehr abgewartet werden müssen. Es ist möglich, den Schnitt an den Kanten entlang zu führen, ohne daß partielle Ablösungen im Randbereich auftreten. Es wird sofort ein gebrauchsfertiges Produkt erhalten.

Eine gute Qualität der Verbundscheibe wird erhalten, wenn der Einzug der Folie und des Glaselementes in den Kalanderspalt mit einer Anfangsgeschwindigkeit erfolgt, die sich kontinuierlich oder stufenweise auf eine während der Fertigungsdauer konstante Richtgeschwindigkeit erhöht, welche 2 bis 10 m/min, vorzugsweise 6 bis 7 m/min, beträgt. Auf diese Weise ist sichergestellt, daß der Einzug von Folie und Glaselement bei Fertigungsbeginn in den Kalanderspalt falten- und blasenfrei erfolgt. Insbesondere sind keine manuellen Fertigungsschritte erforderlich, so daß unabhängig von der Qualifikation des Bedienpersonals ein sehr guter Verbund herstellbar ist. Die hohe Richtgeschwindigkeit, mit der das Verfahren durchführbar ist, läßt die Fertigung von großen Stückzahlen pro Zeiteinheit zu und erhöht die Wirtschaftlichkeit der Fertigung wesentlich.

Die Klebstoffschicht ist dauerhaft klebend, wobei die Aktivierung durch einfaches Abziehen einer Schutzfolie bewirkt wird. Gegenüber der Verbindung z. B. mittels eines Holt-Melt-Klebstoffes und der Aktivierung durch Erwärmung ergeben sich hierbei wesentlich verkürzte Durchlaufzeiten.

Der Druck im Kalanderspalt wird vorteilhafterweise durch folgende Grenzwerte bestimmt:
- An der zur Förderrichtung parallelen Außenkante des Glaselemente herrscht ein erster Grenzdruck, der dem 0,5 bis 0,9 fachen der Biegefestigkeit des Glaselemente entspricht.
- An der Stelle der maximalen Durchbiegung des Glaselementes herrscht ein zweiter Grenzdruck, der mindestens dem zum Abbinden der Klebstoffschicht erforderlichem Druck entspricht.
Bei einer solchen Druckverteilung wird an allen Stellen der zu beschichtenden Oberfläche eine feste Klebverbindung erreicht; zugleich wird eine Überbelastung des Glaselementes vermieden, wodurch die Ausschußquote des Verfahrens wesentlich gemindert ist.

Vorteilhafterweise wird das Verfahren dieser Erfindung bei einer konkaven Durchbiegung des Glaselementes, die in Richtung der Kalanderwalzen gemessen ist, von bis zu 15 mm durchgeführt. Bei solchen Durchbiegungen sind besonders gute Ergebnisse des Beschichtungsverfahrens erreicht worden.

Das Verfahren kann durch eine Naßwäsche der zu beschichtenden Oberfläche ergänzt werden. Damit wird die Oberfläche vor dem Zuführen des Glaselementes in den Kalander entfettet und eine verbesserte Adhäsion des Klebstoffs erreicht.

Weitere Unteransprüche der Erfindung werden im folgenden anhand der Zeichnung und mit Hilfe von Beispielen näher erläutert. Die Figuren zeigen im einzelnen:
- Fig. 1: einen Schnitt durch eine zum Beschichten verwendete Folie,
- Fig. 2: eine schematische Seitenansicht einer Beschich- tungsvorrichtung,
- Fig. 3: ein Detail einer oberen Kalanderwalze aus Figur 2 in schematischer Seitenansicht,
- Fig. 4: eine Staubabsaugungsvorrichtung aus Figur 2 im Schnitt;
- Fig. 5: eine schematische Ansicht einer weiteren Ausbil- dungsform eines Kalanderwalzenpaares;
- Fig. 6: eine weitere Ausbildungsform einer Kalanderwalze in Schnittansicht;
- Fig. 7: eine weitere Ausbildungsform einer Kalanderwalze in Schnittansicht;
- Fig. 8: eine weitere Ausbildungsform einer Kalanderwalze in Schnittansicht; und
- Fig. 9: ein Kupplungselement gemäß der Ausführungsform der Fig. 7 oder 8 in Draufsicht;

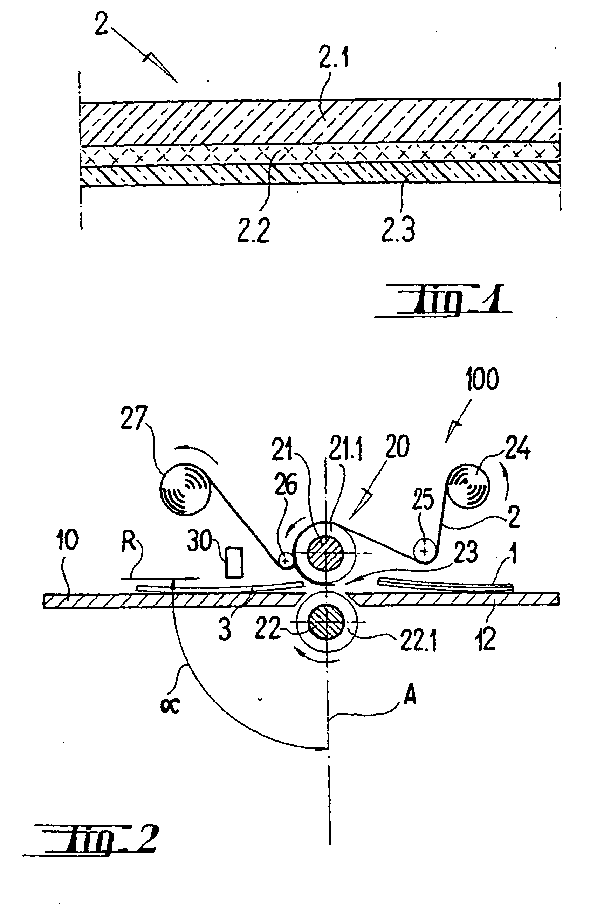

Figur 1 zeigt die Zusammensetzung einer Folie 2, wie sie zum Beschichten vorzugsweise Verwendung findet. Eine solche Folie besteht wenigstens aus einer Kunststoffolienschicht 2.1, einer Klebstoffschicht 2.2 und einer Schutzfolie 2.3.

Die Kunststoffolienschicht 2.1 kann ein- oder mehrschichtig sein und z. B. als Coextrudat hergestellt sein. Sie kann auch mit Beschichtungen oder mit eingemischten Zusätzen versehen sein, die die optischen und/oder elektrischen Eigenschaften beeinflussen können. So ist es möglich, Glaselemente herzustellen, die das Licht reflektieren, so daß die Wärmedurchlässigkeit und die Transparenz gemindert ist und sich ein Sonnen- und Sichtschutz ergibt. Mit elektrisch leitfähigen Beschichtungen oder in der Kunststoffolienschicht 2.1 enthaltenen elektrisch leitenden Drähten kann das fertige Verbundglas 1 in ein Alarmsystem zur Brucherfassung eingebunden werden oder es kann elektrisch beheizt werden.

Die Klebstoffschicht 2.2 besteht aus einem schnell aktivierbaren Klebstoff, der dauerhaft klebrig und mit einer Schutzfolie 2.3 abgedeckt ist, so daß bereits mit Abziehen der Schutzfolie 2.3 eine aktivierte Klebstoffschicht 2.2 bereitgestellt ist.

Erfindungswesentlich ist, daß der verwendete Klebstoff im aktivierten Zustand nicht gleitfähig ist, d.h. er muß bei Kontakt mit dem Substrat eine sofortige Haftung bewirken. Gleitungen innerhalb der Klebstoffschicht 2.2 müssen verhindert werden, daher muß diese möglichst dünn sein und darf insbesondere nicht fließfähig oder gelartig sein.

Die Schutzfolie 2.3 schützt die Klebstoffschicht vor Verunreinigungen bis unmittelbar vor der Kalandrierung. Dazu weist sie wenigstens an ihrer der Klebstoffschicht 2.2 zugewandten Fläche eine haftungsvermindernde Oberfläche auf, so daß ein leichtes Ablösen von der Klebstoffschicht 2.2 ermöglicht ist. Als Schutzfolie 2.3 können beispielsweise auch Siliconpapiere verwendet werden.

In Figur 2 ist eine Beschichtungsvorrichtung 100 dargestellt. Diese umfaßt einen ersten und einen zweiten Support 10, 12, auf welchen die zu bearbeitenden Werkstücke geführt sind. Die Supports 10, 12 können beispielsweise aus einer Platte bestehen, welche mit Bürstenstreifen versehen ist, die sich in Förderrichtung R erstrecken und eine gleichmäßige und beschädigungsfreie Bewegung des Glaselementes 3 bzw. der fertigen Verbundscheibe 1 ermöglichen.

Zwischen den Supports 10, 12 ist ein Kalander 20 angeordnet, mit dem Folie 2 und Glaselement 3 blasen- und faltenfrei aneinander gelegt und zugleich dauerhaft verbunden werden. Der Kalander 20 besteht aus wenigstens zwei Kalanderwalzen 21, 22, die an ihrem Umfang jeweils mit einer elastomeren Oberflächenbeschichtung 21.1, 22.1 versehen sind.

Über dem - in Förderrichtung R gesehen - ersten Support 10 ist eine Reinigungsvorrichtung 30 angeordnet, die die zu beschichtende Oberfläche des Glaselementes 3 unmittelbar vor der Beschichtung reinigt.

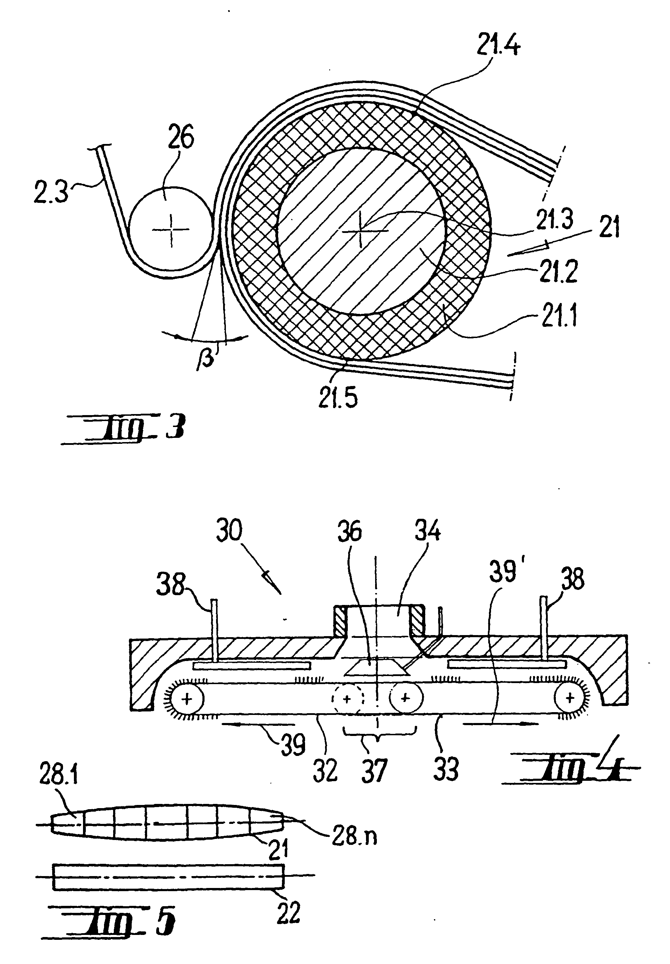

Von einer Vorratsrolle 24 wird die Folie 2 über eine Umlenkrolle 25 zu der oberen Kalanderwalze 21 geführt. Wie insbesondere Figur 3 zeigt, umschlingt die Folie 2 die rotierende Kalanderwalze 21, beginnend von einem Kontaktpunkt 21.4 bis zu einem Ablösepunkt 21.5.

Mit einem möglichst großen Umschlingungswinkel an der Kalanderwalze 21 wird die Folie 2 straff gespannt und blasen- und faltenfrei dem Kalanderspalt 23 zugeführt. Vor dem Eintritt in den Kalanderspalt wird die Schutzfolie 2.3 von der die Kalanderwalze 21 umschlingenden Folie 2 abgezogen. Die abgezogene Schutzfolie 2.3 wird um eine Abzugsrolle 26 gelenkt und auf einer Wickelrolle 27 aufgespult.

Um einen möglichst großen Schälwinkel β und damit eine gute Ablösung der Schutzfolie 2.3 von der Klebstoffschicht 2.2 zu erreichen, weist die Abzugsrolle 26 einen im Verhältnis zur Kalanderwalze 21 kleinen Durchmesser auf und ist sehr nah an dieser angeordnet, wie Figur 3 zeigt.

Die obere Kalanderwalze 21 rotiert um eine Rotationsachse 21.3 und hat im unbelasteten Zustand einen kreisrunden Querschnitt. Auf einem Kern 21.2, der als Metallhohl- oder -vollprofil ausgebildet sein kann, ist eine Elastomerbeschichtung 21.1 aufgebracht. Die untere Kalanderwalze 22 ist in ähnlicher Weise aufgebaut und mit einer Elastomerbeschichtung 22.1 versehen.

Die Elastomerbeschichtungen 21.1 und 22.1 können gleichartig sein. Sie sind aber vorteilhafterweise entsprechend ihrer Funktion gewählt. Dazu ist die obere, folienzuführende Kalanderwalze 21 so beschaffen, daß ein ausreichender Druck auf die Folie 2 zur Erzielung einer dauerhaften Klebverbindung ausgeübt werden kann, ohne jedoch das darunter befindliche Glaselement 3 bis an die Bruchgrenze zu belasten. Die Elastomerbeschichtung 21.1 der Walze muß während des Beschichtungsprozesses ein solches Rückformungsverhalten aufweisen, daß sie sich auch nach starken Formänderungen, z. B. nach einer starken Stauchung im Randbereich des Glaselements 3, schnell wieder ausdehnt und ausreichende Rückstellkraft besitzt, um ein kontinuierliches Anschmiegen der Walzenoberfläche an die Fügepartner zu gewährleisten.

Die untere Kalanderwalze 22 hat im vorliegenden Ausführungsbeispiel einer Vorrichtung 100 die Funktion, das Glaselement 3 von unten abzustützen und eine Gegenkraft zu der Anpreßkraft der oberen Kalanderwalze 21 zu bilden. Es ist daher günstig, bei der unteren Walze 22 eine Elastomerbeschichtung 22.1 mit einer gegenüber der oberen Walze 21 größeren Stauch- und/oder Oberflächenhärte zu wählen.

Figur 4 zeigt die Reinigungseinrichtung 30 der Beschichtungsvorrichtung 100. Diese weist einen Reinigungsbereich auf, der wenigstens der Breite des zu reinigenden Glaselementes entspricht. Die Reinigung erfolgt über endlose Bürstenbänder 32, 33, die um Walzen oder Räder geführt sind. In der Figur ist eine bevorzugte Ausführungsform dargestellt, bei der die Bürstenbänder 32, 33 von innen nach außen wirken und sich deren Wirkungsbereich in einem Zentralbereich 37 der Reinigungseinrichtung 30 überlappt. Die Wirkungsrichtungen sind durch die Pfeile 39, 39° dargestellt.

Die Bürstenbänder 32, 33 werden im Zentralbereich 37 kurz vor dem Kontakt mit der zu reinigenden Oberfläche durch eine Befeuchtungseinrichtung 36 angefeuchtet, um elektrostatische Elektrizität ableiten zu können. Hierzu ist die Befeuchtungseinrichtung 36 mit einem Erdleiter verbunden. Um die Bürstenbänder 32, 33 von dem aufgenommenen Schmutz zu befreien, werden sie, nachdem sie sich von der Glaselementoberfläche abgehoben haben, mit Trocknungseinrichtungen 38 getrocknet. Gleichzeitig bewirkt eine Staubabsaugung 34, daß der Schmutz von den Bürstenbändern 32, 33 und aus dem Arbeitsbereich der Beschichtungsvorrichtung 100 entfernt wird. Die Bürstenbänder 32, 33 können mit federnd gelagerten Elementen und weiteren Rollen oder Walzen gestützt werden, so daß eine optimale Anpassung an die Form der zu reinigenden Oberfläche gewährleistet ist.

Eine weitere Ausbildungsform eines Kalanderwalzenpaars ist in Figur 5 dargestellt. Um bei größeren konkaven Durchbiegungen der Glaselementoberfläche ein kontinuierliches Anschmiegen der oberen, folienführenden Kalanderwalze 21 zu ermöglichen weist diese eine an das Glaselement angepaßte Kontur auf. Vorteilhafterweise ist dazu die Elastomerbeschichtung 21.1 oder die gesamte obere Kalanderwalze 21 aus einer Vielzahl von Walzenabschnitten 28.1, ..., 28.n gebildet. Damit können über die Beschichtungsauswahl bereichsweise angepaßte Anpressdrücke bewirkt werden. Möglich ist auch eine hohlkammerartige Ausbildung der Walzenabschnitte 28.1,...,28.n, wobei der Innendruck jeder Hohlkammer anpaßbar ist.

Darüberhinaus wird vorgeschlagen, die gesamte Walzenbeschichtung 21.1 als Hohlkammer auszubilden und mit einem Fluid oder einem fließfähigem Gel zu füllen. Hierdurch ergibt sich eine gleichmäßige Druckverteilung über die gesamte Berührungsfläche und ein effektiver Abbau von Spannungsspitzen.

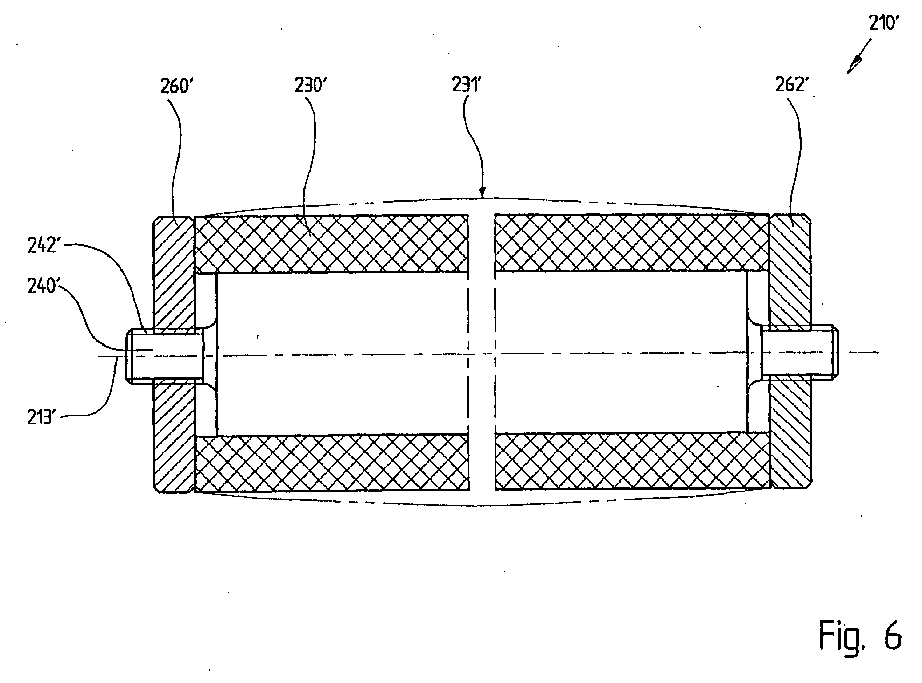

Die in Figur 6 gezeigte Ausführungsform einer Kalanderwalze 210' besteht im wesentlichen aus einem elastischen Walzenquetschkörper 230', der auf eine Achse 240' aufgeschoben ist. Die Achse 240' weist endseitig Gewindeabsätze 242', 244' auf, auf die Druckkörper 260', 262' geschraubt sind. Durch die Verschraubung werden die Druckkörper 260', 262' in die Walzenmitte bewegt. Dabei wird der dazwischen eingeschlossene Walzenquetschkörper 230' axial gestaucht, so daß der Walzenquetschkörper 230' eine bauchigere Kontur 231' aufweist, bei der die Kalanderwalze 210' in einem Zentralbereich einen gegenüber den Randbereichen erhöhten Durchmesser aufweist, so daß die Anpassung der Walzenform an ein konkav gebogene Glaselement 3 verbessert ist.

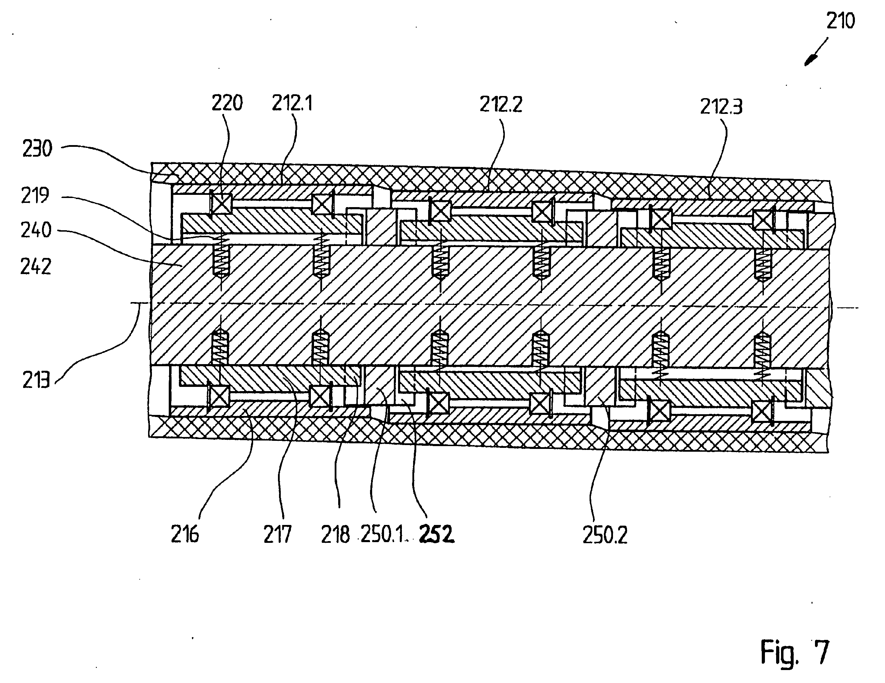

Noch eine weitere Ausbildung einer Kalanderwalze 210 ist in Figur 7 dargestellt. Diese Walze ist aus Walzenkernkörpern 212.1, 212.2, 212.3 gebildet, die nebeneinander auf derselben Rotationsachse 213 angeordnet sind. Die einzelnen Walzenkernkörper 212.1, 212.2, 212.3 sind von einem gemeinsamen elastischen Walzenbelagkörper 230 umfaßt.

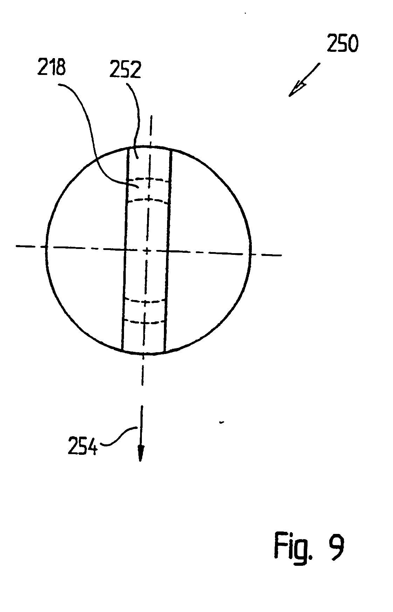

Die Walzenkernkörper 212.1, 212.2, 212.3 können so ausgebildet sein, daß benachbarte Enden zweier Walzenkernkörper koppelbar sind. Bevorzugt sind die Walzenkernkörper 212.1, 212.2, 212.3 über Kupplungselemente 250.1, 250.2 verbunden. Die Walzenkernkörper 212.1, 212.2, 212.3 weisen dabei an wenigstens einem ihrer Enden einen Wellenabsatz 218.1 auf, der in eine kompatible Senkung 252 des Kupplungselements 250.1 eingreift. Die in Fig. 9 dargestellte Senkung 252 erstreckt sich in Richtung der mit dem Pfeil 254 dargestellten Hauptdruckrichtung der Kalanderwalze 210. Mit einem entsprechend ausgebildeten, in die Senkung 252 eingreifenden Wellenabsatz 218 ist ein Ausfedern einzelner Abschnitte der Walze 210 und damit eine Anpassung an die Form des Glaselements zu ermöglichen möglich. Hierzu bestehen die Walzenkernkörper 212 jeweils aus einem Außenring 216, der von dem Walzenbelagkörper 230 umfaßt wird und der über ein Wälzlager 220 mit einem Innenring 217 verbunden ist. Der Innendurchmesser des Innenrings ist größer als der Außendurchmesser einer innenliegenden Achse 240, mit der der Innenring 217 über wenigstens zwei radial verformbare Federelemente 219 verbunden ist.

Im Ruhezustand, in dem der mittlere Walzenkernkörper 212.2 der Figur 7 abgebildet ist, ist der Innenring 217 und damit der Walzenkernkörper konzentrisch zur Achse 240 angeordnet. Je nach Stärke und Richtung einer auf die Kalanderwalze 210 wirkenden Kraft können einzelne Walzenkernkörper 212.1, 212.3 ausfedern. Der Federweg beträgt je nach der Federkonstante der Federelemente 219 und der Belastung bis zu 5 mm. Der die Walzenkernkörper 212 umhüllende Walzenbelagkörper 230 paßt sich dabei kontinuierlich an, so daß abweichend von der ursprünglichen zylindrischen Mantellinie des Walzenbelagkörpers eine gebogene Hüllkurve eingestellt wird. Dabei kann der Radius der gebogenen Außenkontur bis zu 12 mm von dem Zylinderradius abweichen.

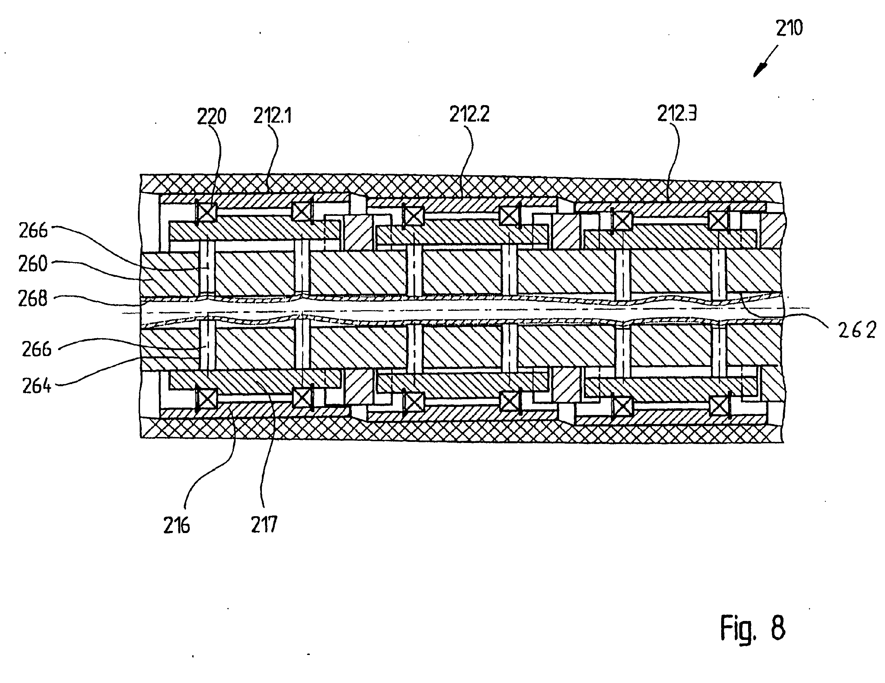

Um einen Druckausgleich zwischen einzelnen Bereichen der Kalanderwalze 210 zu ermöglichen, ist der Innenring 217 bei der Ausführungsform gemäß Fig. 8 über radial verschiebbare Kolbenelemente 266 gegenüber der Achse 260 festgelegt. Die Kolbenelemente 266 sind in radialen Bohrungen 264 in der Achse 260 geführt. Die Bohrungen 264 münden in einer Achsbohrung 262. Vorzugsweise ist jedoch in die Achsbohrung 262 ein flexibler und expandierbarer Druckschlauch 268, der mit einem kompressiblen Medium gefüllt ist, eingezogen. Im Ruhezustand liegen die Kolbenelemente 266 auf dem Druckschlauch 268 auf. Wenn starke Druckkräfte auf die Kalanderwalze 210 wirken, können die Walzenkernkörper 212.1 ... 212.3 ausfedern, wobei die Kolbenelemente 266 zum Teil in den Druckschlauch 268 gedrückt werden. Hierdurch wird der Innendruck im Druckschlauch 268 erhöht. Der erhöhte Innendruck wiederum bewirkt eine Rückstellkraft, so daß nach Fortfall der Belastung die Walzenkernkörper 212.1 ... 212.3 über die Kolbenelemente 266 in den zur Achse 260 konzentrischen Ruhezustand zurück bewegt werden.

Möglich ist es weiterhin, jedes Kolbenelement gegenüber der Bohrung abzudichten und die Achsbohrung mittels eines Fluids direkt mit Druck zu beaufschlagen.

Die Erfindung wird nachfolgend anhand von Beispielen erläutert:

### Beispiel 1(Referenzbeispiel):

Eine 100µm starke PET-Folie 2 ist mit einer 10µm dicken Klebstoffschicht 2.2 aus einem Acrylatklebstoff versehen, der über Druck aktivierbar ist. Der Klebstoff ist mit einer Schutzfolie 2.3 (release liner) aus Polyethylen (PE) abgedeckt. Das zu beschichtende Glaselement 3 ist eine zweiachsig gebogene Automobil-Seitenverglasung, deren größte konkave Durchbiegung 12 mm beträgt. Das Glaselement 3 wird zunächst entlang der Reinigungsvorrichtung 30 und dann zusammen mit der Folie 2, von der die Schutzfolie 2.3 abgezogen ist, in den Kalanderspalt 23 geführt. Die Folie 2 und das Glaselement 3 werden mittels der Kalanderwalzen 21, 22 blasen- und faltenfrei aneinandergelegt und haften sofort aneinander. Entlang der Kanten der so erhaltenen Verbundscheibe 1 werden überstehende Folienreste abgetrennt. Die Verbundscheibe ist gebrauchsfertig.

### Beispiel 2

Eine Folie weist eine Kunststoffschicht, bestehend aus zwei PET-Lagen und einer innenliegenden Lage aus Polyvinylbutylen (PVB), auf. Die Klebstoffschicht ist dauerhaft klebrig und mit einem Siliconpapier abgedeckt. Die Folie wird wie in Beispiel 1 mit einem Glaselement zu einer Verbundscheibe verbunden.

Eine solche Verbundscheibe bietet eine erhöhte Widerstandskraft gegen Stöße und verhindert im Fall des Bruches der Scheibe selbst bei scharfkantigen Splittern ein Eindringen in den Fahrzeuginnenraum.

### Beispiel 3

Das Glaselement besteht aus zwei dünnen, zweiachsig Glasscheiben mit einer innenliegenden, dickeren Polycarbonatscheibe. Bei einem solchen mehrschichtigen Glaselement ergibt sich eine verbesserte Schall- und Wärmedämmung bei gleichzeitiger Gewichtsreduzierung. Die Glasscheiben können nur in Randbereichen gehärtet sein, um eine Anpassung an Gestaltabweichungen zwischen Glas- und Polycarbonatscheiben zu ermöglichen. Durch die nicht durchgängige Härtung besteht jedoch bei einem solchen Sandwichelement die Gefahr, daß sich im Schadensfall große und scharfe Splitter lösen. Um den Splitterabgang zu verhindern, wird das Glaselement an seiner innenliegenden, konkaven Oberfläche mit einer Folie beschichtet.

Mit dem Verfahren der Erfindung gelingt auch bei einem solchen, mit 8 mm relativ dicken Glaselement mit Sandwich-Aufbau eine Folienbeschichtung mit hervorragender Durchsichtigkeit aufgrund der Vermeidung von Schmutzeinschlüssen und der falten- und blasenfreien Aufbringung.

## Patentansprüche

1. Verfahren zur Herstellung einer Verbundscheibe (1) aus wenigstens einer ein- oder mehrschichtigen Folie (2), bestehend aus einer Kunststofffolienschicht (2.1) und einer Klebstoffschicht (2.2), und einem zweiachsig gebogenem Glaselement (3) bei dem:
- die zu beschichtende Oberfläche des Glaselementes (3) unmittelbar vor Eintritt in einen Kalander (20) mit einer bürstenbestückten Reinigungseinrichtung (30) gereinigt und in den Kalanderspalt (23) des Kalanders (20) gefördert wird, wobei Kalanderwalzen (21, 22; 210; 210') verwendet werden, deren Oberflächen mit einer Elastomerbeschichtung (21.1, 22.1, 230, 230') versehen sind;
- eine die Klebstoffschicht (2.2) der Folie (2) abdeckende Schutzfolie (2.3) unmittelbar vor dem Kalanderspalt (23) abgelöst und die Klebstoffschicht aktiviert wird und die Folie (2) in den Kalanderspalt gefördert wird,
- die Folie (2) auf das Glaselement (3) im Kalanderspalt (23) flächig angelegt, das mit der Folie belegte Glaselement unter Druckbeaufschlagung durch den Kalander gefördert und eine dauerhafte Verbindung von Glaselement und Folie durch Abbinden der Klebstoffschicht (2.2) im Kalander hergestellt werden und
- die Kanten des Verbundelementes nach Austritt aus dem Kalander beschnitten und überstehende Folienreste entfernt werden,
**dadurch gekennzeichnet, dass** das flächige Anlegen der Folie auf dem Glaselement wasserfrei erfolgt und eine wasserfrei verarbeitbare und abbindbare, dauerhaft klebende und durch Abziehen der Schutzfolie aktivierbare Klebstoffschicht (2.2) verwendet wird, die nicht gleitfähig ist, so dass eine Relativbewegung zwischen dem Glaselement (3) und der anhaftenden Kunststofffolienschicht (2.1) während und nach dem flächigen Anlegen unterbunden wird,
und dass das Abbinden der Klebstoffschicht (2.2) und die Herstellung einer dauerhaften Verbindung im Kalander (20) bewirkt wird.

2. Verfahren nach Anspruch 1, **dadurch gekennzeichnet, daß** der Beschnitt der Kanten unmittelbar nach dem Austritt der Verbundscheibe (1) aus dem Kalander (20) erfolgt.

3. Verfahren nach Anspruch 1 oder 2, **dadurch gekennzeichnet, dass** der Einzug der Folie (2) und des Glaselementes (3) in den Kalanderspalt mit einer, sich kontinuierlich oder stufenweise bis auf eine während der Fertigungsdauer konstante Richtgeschwindigkeit erhöhenden Anfangsgeschwindigkeit erfolgt.

4. Verfahren nach Anspruch 3, **dadurch gekennzeichnet, daß** die Richtgeschwindigkeit 2 bis 10 m/min, vorzugsweise 6 bis 7 m/min, beträgt.

5. Verfahren nach einem der Ansprüche 1 bis 4, **dadurch gekennzeichnet, dass** im Kalanderspalt (23) ein Druckverlauf mit folgenden Grenzwerten bewirkt wird:
- ein erster Grenzdruck entlang der zur Förderrichtung parallelen Außenkanten des Glaselementes (3), wobei der erste Grenzdruck das 0,5 bis 0,9fache der Biegefestigkeit des Glaselementes (3) beträgt.
- ein zweiter Grenzdruck an der Stelle der maximalen Durchbiegung des Glaselementes (3), wobei der zweite Grenzdruck mindestens dem zum Abbinden der Klebstoffschicht (2.2) erforderlichen Druck entspricht.

6. Verfahren nach Anspruch 5, **dadurch gekennzeichnet, dass** die konkave Durchbiegung des Glaselementes (3) entlang der Achsen der Kalanderwalzen (21, 22; 210; 210') bis zu 15 mm beträgt.

7. Verfahren nach einem der Ansprüche 1 bis 6, **dadurch gekennzeichnet, dass** vor dem Zuführen des Glaselementes (3) zum Kalander (20) eine Nasswäsche der zu beschichtenden Oberfläche erfolgt.

## Claims

1. A method for manufacturing a composite glass pane (1) composed of at least a single or a multi-layer film (2), consisting of a plastic film layer (2.1) and an adhesive layer (2.2), and a biaxially-bent glass element (3) wherein:
- the surface to be coated of the glass element (3) is cleaned with a brush-equipped cleaning arrangement (30) directly prior to entering into a calender (20) and is conveyed into the calender nip (23) of the calender (20), calender rolls (21, 22; 210; 210') being used the surfaces of which are provided with an elastomeric coating (21.1, 22.1, 230, 230');
- a protective film (2.3), which covers the adhesive layer (2.2) of the film (2), is detached directly prior to the calender nip (23) and the adhesive layer is activated and the film (2) is conveyed into the calender nip;
- the film (2) is laterally positioned against the glass element (3) in the calender nip (23), and said glass element glazed with the film is conveyed through the calender under application of pressure and a permanent bond is created between glass element and film upon hardening of the adhesive layer (2.2) in the calender, and
- subsequent to emerging from the calender, the edges of the composite element are cut off and protruding film remains are removed,
**characterised in that** the lateral positioning of the film against the glass element is effected in the absence of water and a detachable, permanently adhering adhesive layer (2.2), which can be processed in the absence of water, is activated by peeling away the protective film, and is incapable of gliding is used, thereby preventing relative movement arising between the glass element (3) and the adhering plastic film layer (2.1) during and after the effecting of the lateral positioning,
and furthermore **characterised in that** the hardening of the adhesive layer (2.2) as well as the creation of a permanent bonding are effected in the calender (20).

2. Method as claimed in claim 1, **characterised in that** the cutting of the edges occurs directly subsequent to the composite glass pane (1) emerging from the calender (20).

3. Method as claimed in claim 1 or claim 2, **characterised in that** the entrance of the film (2) and of the glass element (3) into the calender nip is effected continuously or step-wise at an increasing initial rate until reaching a constant target speed during the actual production time.

4. Method as claimed in claim 3, **characterised in that** the target speed is 2 to 10 m/min, preferably 6 to 7 m/min.

5. Method as claimed in any of claims 1 to 4, **characterised in that** a pressure profile with the following limit values is effected in the calender nip (23):
- a first limit pressure along the outer edges of the glass element (3) that are parallel to the conveying device, the first limit pressure being 0.5 to 0.9 times the flexural resistance of the glass element (3);
- a second limit pressure at the location of the maximum deflection of the glass element (3), the second limit pressure corresponding to at least the pressure required for the hardening of the adhesive layer (2.2).

6. Method as claimed in claim 5, **characterised in that** the concave deflection of the glass element (3) along the axes of the calender rolls (21, 22; 210; 210') can be up to 15 mm.

7. Method as claimed in any of claims 1 to 6, **characterised in that** prior to introducing the glass element (3) into the calender (20), a wet scrubbing of the surfaces to be coated is effected.

## Revendications

1. Procédé pour fabriquer un verre feuilleté (1) d'au moins une feuille (2) à une couche ou à plusieurs couches, se composant d'une couche de feuille en plastique (2.1) et d'une couche de colle (2.2), et d'un élément en verre (3) biaxialement cambré, pour lequel .
- la surface à revêtir de l'élément en verre (3) est nettoyée juste avant l'entrée dans une calandre (20) avec un dispositif de nettoyage (30) équipé de balais et transportée dans la fente (23) de la calandre (20), des rouleaux de calandre (21 ; 22 ; 210 ; 210') étant utilisés, dont les surfaces sont pourvues d'un revêtement en élastomère (21.1, 22.1, 230, 230') ;
- une feuille de protection (2.3) recouvrant la couche de colle (2.2) de la feuille (2) est décollée juste avant la fente de calandre (23) et la couche de colle est activée et la feuille (2) est transportée dans la fente de calandre,
- la feuille (2) est placée à plat sur l'élément en verre (3) dans la fente de calandre (23), l'élément en verre garni de la feuille est transporté sous pressurisation par la calandre et une liaison durable entre l'élément en verre et la feuille est établie par durcissement de la couche de colle (2.2) dans la calandre et
- les arêtes de l'élément feuilleté sont cisaillées après la sortie de la calandre et des restes de feuille en saillie sont retirés,
**caractérisé en ce que** le placement à plat de la feuille sur l'élément en verre est effectué sans eau et une couche de colle (2.2) pouvant être traitée et durcie sans eau, adhérant durablement et activable par retrait de la feuille de protection est utilisée, laquelle n'est pas glissante de sorte qu'un mouvement relatif entre l'élément en verre (3) et la couche de feuille en plastique adhésive (2.1) soit empêché pendant et après le placement à plat,
et **en ce que** le durcissement de la couche de colle (2.2) et l'établissement d'une liaison durable dans la calandre (20) sont provoqués.

2. Procédé selon la revendication 1, **caractérisé en ce que** le cisaillement des arêtes est effectué juste après la sortie du verre feuilletée (1) de la calandre (20).

3. Procédé selon la revendication 1 ou 2, **caractérisé en ce que** la rentrée de la feuille (2) et de l'élément en verre (3) dans la fente de calandre est effectuée à une vitesse initiale augmentant en continu ou par étapes jusqu'à une vitesse cible constante pendant la durée de fabrication.

4. Procédé selon la revendication 3, **caractérisé en ce que** la vitesse cible est comprise entre 2 et 10 m/min, de préférence 6 et 7 m/min.

5. Procédé selon l'une quelconque des revendications 1 à 4, **caractérisé en ce que** dans la fente de calandre (23) est provoquée une allure de pression avec les valeurs limites suivantes :
- une première pression limite le long des arêtes extérieures parallèles au sens de transport de l'élément en verre (3), la première pression limite étant comprise entre 0,5 et 0,9 fois la résistance à la flexion de l'élément en verre (3).
- une seconde pression limite à la place de la flexion maximale de l'élément en verre (3), la seconde pression limite correspondant au moins à la pression nécessaire au durcissement de la couche de colle (2.2).

6. Procédé selon la revendication 5, **caractérisé en ce que** la flexion concave de l'élément en verre (3) le long des axes des rouleaux de calandre (21, 22 ; 210 ; 210') s'élève à 15 mm au maximum.

7. Procédé selon l'une quelconque des revendications 1 à 6, **caractérisé en ce qu'**un lavage par voie humide de la surface à revêtir est effectué avant l'amenée de l'élément en verre (3) à la calandre (20).
